Europäisches Patentamt

(19) European Patent Office

Office européen des brevets

(11) Publication number: **0 449 604 A1**

(12) **EUROPEAN PATENT APPLICATION**

(21) Application number: 91302672.0

(22) Date of filing: 27.03.91

(51) Int. Cl.⁵: **C08K 7/22, C08L 81/02**

(30) Priority: 30.03.90 JP 86988/90

(43) Date of publication of application:
02.10.91 Bulletin 91/40

(84) Designated Contracting States:
AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka 541 (JP)

(72) Inventor: Nonaka, Toshifumi
53-116, Aza-Oginohara, Obuchi
Fuji-shi, Shizuoka (JP)
Inventor: Tokushige, Kazutomo
885-11, Miyajima
Fuji-shi, Shizuoka (JP)

(74) Representative: Jackson, Peter et al
HYDE, HEIDE & O'DONNELL 10-12 Priests
Bridge
London SW15 5JE (GB)

(54) Lightweight polyarylene sulphide resin composition and moulded article thereof.

(57) A polyarylene sulphide resin composition which can be used for a molded article having improved surface smoothness comprises:
(A) 100 parts by weight of a polyarylene sulphide resin and
(B) 5 to 300 parts by weight of a hollow microspherical filler having a wall thickness ratio of 5 to 70 as defined by the following equation:
wall thickness ratio

$$= \frac{\text{average outside diameter of hollow microspherical filler}}{\text{average wall thickness of hollow microspherical filler.}}$$

The molded article is suitable for use as an improved lamp reflector.

EP 0 449 604 A1

The present invention relates to a lightweight polyarylene sulphide resin composition and a molded article thereof. Particularly, the present invention relates to a polyarylene sulphide resin composition which is excellent in mechanical properties such as stiffness and heat resistance and surface smoothness and is lightweight and inexpensive. The invention also provides a molded article of the said resin, more particularly a material suitable for the components of vehicles such as automobiles, for example, a lamp reflector.

Recently a thermoplastic resin with high resistance to heat and chemicals and excellent flame retardance has been demanded as the material for components of electrical or electronic appliances, of automobiles or of chemical instruments. A polyarylene sulphide (PAS) resin represented by polyphenylene sulphide (PPS) resin is one of the resins satisfying this demand, so that the demand therefor is increasing. However, this resin is relatively costly and is generally poor as such in mechanical properties, particularly modulus, so that the addition of a large amount of a filler thereto has been necessary for the purpose of improving not only these properties but also the deformation resistance of the resin and for reducing its cost.

However, the addition of an ordinary filler brings about unfavourable phenomona such as formation of a molded article having poor surface smoothness, reduced fluidity and increased weight.

Although a lightweight resin exhibiting both excellent heat resistance and acceptable mechanical properties and having excellent surface smoothness has been demanded as the material of vehicle components such as an automobile lamp reflector, neither a material nor a molded article satisfying all of these requirements has been obtained hitherto.

Under these circumstances, the inventors of the present invention have conducted intensive studies to develop a lightweight resin material which exhibits the demanded properties and have found that the addition of a hollow filler having a nearly spherical shape and a specified wall thickness effectively solves the problems of a PAS resin. The present invention has been accomplished on the basis of this finding.

Namely the present invention provides a polyarylene sulphide resin composition comprising:
(A) 100 parts by weight of a polyarylene sulphide resin and
(B) 5 to 300 parts by weight of a hollow microspherical filler having a wall thickness ratio of 5 to 70 as defined by the following equation:

wall thickness ratio

$$= \frac{\text{average outside diameter of hollow microspherical filler}}{\text{average wall thickness of hollow microspherical filler}}$$

The invention further provides a molded article of the resin composition defined above.

The composition of the invention has acceptable mechanical properties and excellent heat resistance and gives a molded article which hardly causes deformation (warpage) and has a smooth surface.

Although the object of the present invention can be attained by blending the essential components (A) and (B), the additional use of a filler other than the component (B), particularly glass fibre, gives a composition which exhibits not only the above characteristics but also mechanical properties desirably controlled according to the duty which the component is required to perform.

The constituents of the composition according to the present invention are described below in more detail.

The polyarylene sulphide resin to be used in the present invention as the component (A) is mainly constituted of repeating units represented by the formula: -(Ar-S)- (wherein Ar is an arylene group).

Examples of the arylene group include p-phenylene, m-phenylene, o-phenylene anad substituted phenylene groups (wherein the substituent is an alkyl group preferably having 1 to 6 carbon atoms or a phenyl group), p,p'-phenylene sulphone, p,p'-biphenylene, p,p'-diphenylene ether, p,p'-diphenylene-carbonyl and naphthalene groups.

Although an arylene sulphide homopolymer constituted of the same repeating units among the arylene sulphide groups described above may be used in the present invention, the use of a copolymer constituted of a plurality of repeating units different from each other is preferable in some cases in respect of the processability of the resulting composition.

Particularly, a substantially linear homopolymer composed of p-phenylene sulphide repeating units is preferably used.

The copolymer to be used in the present invention may be any one constituted of two or more repeating units selected from among the arylene sulphide units mentioned above. Particularly, a copolymer mainly comprising p-phenylene sulphide units and containing 5 to 30 molar %, still particularly 10 to 25 molar % of m-phenylene sulphide units is preferably used.

Among such copolymers, a block copolymer (for example, one disclosed in Japanese Patent Laid-Open No. 14228/1986) is preferably used rather than a random one, because the former is superior to the latter in processability, heat resistance and mechanical properties.

Although the PAS resin to be used as the component (A) in the present invention is not particularly limited but may be an oxidatively or thermally crosslinked one, a substantially linear polymer having a low degree of crosslinking prepared by the poly-condensation of a difunctional monomer is preferable. Further, a partially branched or crosslinked polymer may be contained therein.

Particularly, it is suitable to use a substantially linear polymer having a melt viscosity of 1 to 1000 Pa s (10 to 10,000 P), preferably 5 to 500 Pa s (50 to 5,000 P), as determined under the condition of a shear rate of 1200/sec.

When the melt viscosity of the polymer is less than 1 Pa s, the resulting composition will be melt-processed with difficulty, owing to its fluidity being too high, giving a molded article of poor mechanical strengths, if it can be molded at all. On the other hand, a polymer having a melt viscosity exceeding 1000 Pa s is too poor in fluidity to be easily melt-processed.

The matrix resin according to the present invention may auxiliarily contain a small amount of other thermoplastic resin in addition to the PAS resin, so far as the object of the present invention is not hindered. The auxiliary thermoplastic resin may be any which is stable at high temperature. Examples thereof include polyolefins; aromatic polyesters prepared from an aromatic dicarboxlic acid and a diol or from a hydroxycarboxylic acid, such as polyethylene terephthalate, polybutylene terephthalate and wholly aromatic polyesters; polyamides; polycarbonate; ABS, polyphenylene oxides, polyalkyl acrylates; polyacetals; polysulphones; polyether sulphones; polyether imides; polyether ketones and fluororesins. These thermoplastic resins may also be used as a mixture of two or more of them.

The hollow microspherical filler (B) to be used in the present invention as a characteristic component is a nearly spherical hollow filler having a wall thickness ratio of 5 to 70 (as defined by the above equation). The filler (B) is generally one made of an inorganic substance such as glass, silica, carbon or "shirasu". Alternatively, it may be one made of an organic substance such as phenolic resin. A filler having a wall thickness ratio exceeding 70 has insufficient inherent strength and is easily destroyable by friction, shearing force and pressure during such processing steps as blending of the components, melt kneading with an extruder or injection molding. Therefore, when such a filler is used, no weight-reducing effect is attained and the surface smoothness is unfavorably lowered.

The PAS resin has a tendency of less destroying a hollow microspherical filler as compared with other resin even when the wall thickness ratio thereof is relatively high. Accordingly, even a lightweight filler (B) having a thin wall can be used for the resin, though the wall thickness of the filler to be used therefor has, of course, a limit.

On the contrary, the use of a filler having too low a wall thickness ratio cannot reduce the weight of the molded article, thus being unfavorable for the object of the present invention. It is particularly preferable that the wall thickness ratio of the filler (B) be from 10 to 50.

The particle (outside) diameter of the filler (B) is preferably 1 to 2 μm, most preferably 5 to 100 μm.

The shape of the filler (B) may be substantially spherical or ellipsoidal.

The amount of the filler (B) added is 5 to 300 parts by weight, particularly preferably 10 to 200 parts by weight, per 100 parts by weight of the PAS resin used. When the amount is smaller than 5 parts by weight, the required properties such as mechanical properties and heat resistance will not be sufficiently improved, while when it is too large, the resulting composition will unfavorably exhibit poor processability in molding and lowered mechanical properties.

The composition of the present invention may further contain an inorganic or organic filler (C) other than the component (B) depending upon the object.

Although the filler (C) is not necessarily an essential component, the addition thereof as an auxiliary component is preferable for producing a molded article which is excellent in mechanical characteristics, heat resistance, dimensional stability (resistance to deformation and warpage) and electrical properties. The filler (C) may be selected from among fibrous, powdery and flaky ones depending upon the object. Fibrous fillers are particularly preferable as the filler (C) to be used together with the component (B).

The fibrous filler (C) includes inorganic fibrous materials, for example, glass fibre, carbon fibre, asbestos fibre, silica fibre, silica/alumina fibre, alumina fibre, zirconia fibre, boron nitride fibre, silicon nitride fibre, boron fibre, potassium titanate fibre and fibres of metals such as stainless steel, aluminium, titanium, copper or brass. Further, the fibrous filler includes high-melting organic fibrous materials and particular examples thereof include polyamide, fluororesins, polyester resins and acrylic resins. Among them, glass fibre is a representative fibrous filler.

The use of a fibrous filler (C), especially glass fibre, together with the hollow microspherical filler (B) remarkably improves the mechanical properties and the thermal deformation temperature, even when the amount of the fibrous filler (C) is small.

Although the glass fibre to be used as the component (C) in the present invention may be a commercially available one and the sizes thereof are not limited, it is preferable that the diameter be 2 to 20 μm and the length be 0.03 to 15 mm.

Although the glass fibre may be made of glass A, glass E or other, it is particularly preferable to use a fibre made of glass E which causes less leaking during the kneading thereof together with the resin.

Alternatively, a powdery or flaky filler may be auxiliarily used as the component (C), so far as the object of the present invention is not hindered.

The powdery filler (C) includes carbon black, graphite, silica, quartz powder, glass bead, glass powder, silicates such as calcium silicate, aluminium silicate, kaolin, talc, clay, diatomaceous earth and wollastonite; metal oxides such as iron oxide, titanium oxide, zinc oxide, antimony trioxide and alumina; metal carbonates such as calcium carbonate and magnesium carbonate; metal sulphates such as calcium sulphate and barium sulphate; ferrite, silicon carbide, silicon nitride, boron nitride and various metal powders.

The flaky filler (C) includes mica, glass flake and various metal foils.

These inorganic or organic fillers (C) may be used alone or as a mixture of two or more of them.

However, the addition of the filler (C) such as glass fibre is adverse to the weight reduction of the material and the improvement in the surface smoothness thereof which are the objects of the present invention. Therefore, it is preferable that the amount of the filler (C) to be used be a minimum necessary one. That is, the amount is preferably 100 parts by weight or less, more preferably 5 to 50 parts by weight, per 100 parts by weight of the PAS resin used.

At least part of the fillers (B) and (C) to be used in the present invention may be treated with a surface treatment or a sizing agent. Examples of the surface treatment and sizing agent include functional compounds such as epoxy, isocyanate, silane and titanate compounds; and other thermoplastic resins.

It is preferable that the composition of the present invention contain an alkoxysilane compound (D) in addition to the above components.

The alkoxysilane compound (D) is one or more members selected from among vinylalkoxysilanes, epoxyalkoxysilanes, aminoalkoxysilanes, mercaptoalkoxysilanes and allylalkoxysilanes.

Examples of the vinylalkoxysilane include vinyltriethoxysilane, vinyltrimethoxysilane and vinyltris(β-methoxyethoxy)silane.

Examples of the epoxyalkoxysilane include γ-glycidoxypropyltrimethoxysilane, β-(3,4-epoxycyclohexyl)ethyltrimethoxysilane and γ-glycidoxypropyltriethoxysilane.

Examples of the aminoalkoxysilane include γ-aminopropyltrimethoxysilane, γ-aminopropyltriethoxysilane, γ-aminopropylmethyldiethoxysilane, N-(β-aminoethyl)-γ-aminopropyltrimethoxysilane and N-phenyl-γ-aminopropyltrimethoxysilane.

Examples of the mercaptoalkoxysilane include γ-mercaptopropyltrimethoxysilane and γ-mercaptopropyltriethoxysilane.

Examples of the allylalkoxysilane include γ-diallylaminopropyltrimethoxysilane, γ-allylaminopropyltrimethoxysilane and γ-allylthiopropyltrimethoxysilane.

The addition of such an alkoxysilane compound (D) is effective in preventing a reduction in toughness of the composition, since a composition containing a large amount of a spherical filler like the one according to the present invention is apt to undergo such reduction.

The amount of the alkoxysilane compound (D) is 5 parts by weight or below, preferably 0.01 to 3 parts by weight, per 100 parts by weight of the PAS resin (A).

The alkoxysilane compound (D) may be added either as a surface treatment deposit on the fillers (B) and/or (C) or as a sizing agent alone.

Further, the composition of the present invention may suitably contain conventional additives for thermoplastic resins depending upon the required performance. Examples thereof include stabilizers such as antioxidants and ultraviolet absorbers, antistatic agents, flame retardants, colouring agents such as dyes and pigments, lubricants, crystallization accelerators and nucleating agents.

The composition of the present invention can be prepared by a conventional process for the preparation of a synthetic resin composition and with conventional equipment therefor. Namely, necessary components are mixed and kneaded together and extruded with a single or twin-screw extruder to give a molding pellet. In order to facilitate the dispersion and mixing of the components, it is preferable that a part or whole of the resin component be ground prior to the mixing and the extrusion. Further, it is effective in preventing the fracture of the filler that the components (B) and/or (C) be added during the melt-kneading of the components (A) and/or (D).

The pelletized composition thus prepared can be molded by any known molding process for thermoplastic resins such as injection, extrusion, vacuum forming or compression molding. Injection molding is most desir-

4

able.

The invention is further illustrated by the following non-limiting Examples.

Examples 1 to 10 and Comparative Examples 1 to 4

Components listed in Table 1 were mixed together with a blender for 2 minutes in amounts specified in Table 1 respectively. The obtained mixture was melt-kneaded with an extruder at a cylinder temperature of 310°C to give pellets of a polyphenylene sulphide resin composition. The pellets were molded into test pieces with an injection molding machine at a cylinder temperature of 320°C and a mold temperature of 150°C. The test pieces were examined for physical properties (such as specific gravity, tensile strength, and elongation and flexural properties). In order to determine the surface smoothness of a molded article of the composition, the pellets were molded into a flat plate (120 mm x 120 mm x 3 mm) with an injection molding machine at a cylinder temperature of 320°C and a mold temperature of 150°C. The image clarity was determined with an image clarity measuring instrument (manufactured by Suga Test Instruments Co., Ltd.) with an optical comb of 1.0 mm and an angle of reflection of 45°.

The results are given in Table 1.

As described above, the composition of the present invention is excellent in heat resistance and mechanical properties and can give a lightweight molded article which is free from deformation and exhibits excellent surface smoothness. Accordingly the composition is useful as the material of the parts of devices necessitating these characteristics, particularly vehicle components, such as an automobile lamp reflector.

Table 1

| | | (A) PPS resin (pts. by wt.) | (B) hollow filler (note 1) | (pts. by wt.) | (c) glass fiber (13 μm x 3 mm) (pts. by wt.) | (D) alkoxysilane (note 2) (pts. by wt.) | specific gravity | image clarity | tensile strength (kg/cm²) | tensile elongation (%) | flexural strength (kg/cm²) | flexural modulus (kg/cm²) |
|---|---|---|---|---|---|---|---|---|---|---|---|---|
| Example | 1 | 100 | hollow glass bead[a] | 50 | 0 | 0 | 1.32 | 84.9 | 960 | 2.9 | 1100 | 77400 |
| | 2 | 100 | hollow glass bead[a] | 100 | 0 | 0 | 1.30 | 80.1 | 840 | 1.5 | 1020 | 92100 |
| | 3 | 100 | hollow glass bead[a] | 100 | 0 | 0.5[e] | 1.30 | 78.1 | 1000 | 1.8 | 1290 | 91800 |
| | 4 | 100 | hollow glass bead[a] | 400 | 0 | 0 | 1.26 | 71.7 | 570 | 0.8 | 930 | 157300 |
| | 5 | 100 | hollow glass bead[a] | 100 | 0 | 0 | 1.36 | 73.1 | 980 | 1.4 | 1270 | 164100 |
| | 6 | 100 | hollow glass bead[a] | 100 | 10 | 0 | 1.70 | 29.3 | 1130 | 1.0 | 1600 | 197000 |
| | 7 | 100 | hollow glass bead[a] | 100 | 100 | 0.3[f] | 1.70 | 28.9 | 1300 | 1.2 | 1840 | 194000 |
| | 8 | 100 | hollow glass bead[b] | 100 | 100 | 0 | 1.03 | 68.8 | 710 | 1.3 | 890 | 93300 |
| | 9 | 100 | hollow glass bead[b] | 100 | 0 | 0 | 1.10 | 52.5 | 830 | 1.2 | 970 | 166300 |
| | 10 | 100 | hollow glass bead[c] | 100 | 10 | 0 | 1.07 | 63.3 | 680 | 1.3 | 840 | 93200 |
| Comp. Example | 1 | 100 | glass bead | 100 | 0 | 0 | 1.92 | 32.3 | 750 | 1.2 | 920 | 92200 |
| | 2 | 100 | glass bead | 100 | 100 | 0 | 2.06 | 11.5 | 1270 | 0.9 | 2080 | 192000 |
| | 3 | 100 | calcium carbonate | 100 | 100 | 0 | 2.17 | 10.2 | 1410 | 0.9 | 2100 | 185000 |
| | 4 | 100 | hollow glass bead[d] | 100 | 0 | 0 | 1.63 | 29.2 | 610 | 1.2 | 740 | 93400 |

(note 1) a: specific gravity: 1.10, mean particle diameter: 8 μm, wall thickness ratio: 11.4

b: specific gravity: 0.43, mean particle diameter: 28 μm, wall thickness ratio: 31.1

c: specific gravity: 0.23, mean particle diameter: 62 μm, wall thickness ratio: 63

d: specific gravity: 0.13, mean particle diameter: 50 μm, wall thickness ratio: 114

(note 2) e: γ-aminopropyltriethoxysilane

f: γ-glycidoxypropyltrimethoxysilane

EP 0 449 604 A1

**Claims**

1. A polyarylene sulphide resin composition comprising:
   (A) 100 parts by weight of a polyarylene sulphide resin and
   (B) 5 to 300 parts by weight of a hollow microspherical filler having a wall thickness ratio of 5 to 70 as defined by the following equation:
   wall thickness ratio

$$= \frac{\text{average outside diameter of hollow microspherical filler}}{\text{average wall thickness of hollow microspherical filler.}}$$

2. A polyarylene sulphide resin composition as set forth in claim 1, wherein the polyarylene sulphide resin (A) is a substantially linear homopolymer composed of p-phenylene sulphide repeating units.

3. A polyarylene sulphide resin composition as set forth in claim 1, wherein the polyarylene sulphide resin (A) is a copolymer mainly comprising p-phenylene sulphide units and containing 5 to 30 molar % of m-phenylene sulphide units.

4. A polyarylene sulphide resin composition as set forth in any preceding claim, wherein the wall thickness ratio of the hollow microspherical filler (B) is from 10 to 50.

5. A polyarylene sulphide resin composition as set forth in any preceding claim, wherein the particle diameter of the hollow microspherical filler (B) is 1 to 200μm.

6. A polyarylene sulphide resin composition as set forth in any preceding claim, characterised by further containing 5 to 100 parts by weight of a filler other than the component (B) as component (C) in addition to the components (A) and (B).

7. A polyarylene sulphide resin composition as set forth in claim 6, wherein the component (C) is glass fibre.

8. A polyarylene sulphide resin composition as set forth in claim 7, wherein the glass fibre has a diameter of 2 to 20 μm and a length of 0.03 to 15 mm.

9. A polyarylene sulphide resin composition as set forth in any preceding claim, characterised by further containing 0.01 to 5 parts by weight of an alkoxysilane compound as component (D).

10. A molded article made from a polyarylene sulphide resin composition as set forth in any preceding claim.

EP 0 449 604 A1

European Patent Office

**EUROPEAN SEARCH REPORT**

Application Number

EP 91 30 2672

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-198648 (POLYPLASTICS CO. LTD.) <br> * page 3, line 20 - page 4, line 21 * <br> --- | 1 | C08K7/22 <br> C08L81/02 |
| A | EP-A-340954 (POLYPLASTICS CO. LTD.) <br> *Comp. Example 4* <br> ----- | 1-10 | |
| | | | **TECHNICAL FIELDS SEARCHED (Int. Cl.5 )** <br><br> C08K <br> C08L |

The present search report has been drawn up for all claims

| Place of search | Date of completion of the search | Examiner |
|---|---|---|
| THE HAGUE | 02 JULY 1991 | WILSON A.J.D. |

EPO FORM 1503 03.82 (P0401)